# FASCICULE DE BREVET EUROPEEN

(11) **EP 3 077 234 B1**
(45) Date de publication et mention de la délivrance du brevet: **23.08.2017**
(21) Numéro de dépôt: 14809343.8
(22) Date de dépôt: 02.12.2014
(51) Int. Cl.: B60H 1/00

(54) **UNITE DE CONDITIONNEMENT D'AIR POUR VEHICULE AUTOMOBILE**
KLIMAANLAGENEINHEIT FÜR EIN KRAFTFAHRZEUG
AIR-CONDITIONING UNIT FOR A MOTOR VEHICLE

(30) Priorité: 04.12.2013 FR 1362062
(43) Date de publication de la demande: 12.10.2016
(73) Titulaire: Valeo Systèmes Thermiques, 78320 Le Mesnil-Saint-Denis (FR)
(72) Inventeur: TRUILLET, Franck, F-28410 Bu (FR); LECHAT, Yvan, F-78120 Sonchamp (FR)
(74) Mandataire: Metz, Gaëlle
(86) Numéro de dépôt international: PCT/EP2014/076272
(87) Numéro de publication internationale: WO 2015/082478

(56) Documents cités:
- EP-A1- 2 329 972
- US-A1- 2013 025 310
- US-B1- 6 192 698
- US-B1- 7 082 990

## Description

L'invention concerne principalement une unité de conditionnement d'air.

L'invention concerne également un véhicule automobile équipé d'au moins une telle unité de conditionnement d'air.

Les installations de conditionnement d'air, également dénommées installations de climatisation, comportent de façon connue au moins un compresseur, un évaporateur, un organe de détente et un organe de chauffage.

Dans la structure classique des installations de conditionnement d'air, l'évaporateur et l'organe de chauffage sont placés en série dans une unité de conditionnement d'air. Le flux d'air est admis en amont de l'évaporateur et distribué dans l'habitacle du véhicule en aval de l'organe de chauffage.

De façon connue, la température du flux d'air en sortie de l'évaporateur est mesurée par un capteur de température afin d'ajuster les puissances respectives de fonctionnement de l'évaporateur et de l'organe de chauffe selon la température commandée par l'utilisateur depuis l'habitacle.

La publication US 7,082,990 prévoit une unité de conditionnement d'air dans laquelle deux flux d'air circulent dans l'évaporateur et dans l'unité de chauffe. Le premier flux d'air est issu de l'air extérieur au véhicule et le second flux d'air provient de l'air intérieur de l'habitacle. De cette façon, les puissances respectives de fonctionnement de l'évaporateur et de l'unité de chauffe sont optimisées selon la saison et la température commandée dans l'habitacle du véhicule.

Ces deux flux d'air circulent dans des premier et second conduits d'air délimités par une paroi de séparation qui s'étend en amont de l'évaporateur, entre l'évaporateur et l'organe de chauffe et en aval de l'organe de chauffe.

Il est prévu dans cette configuration une mesure de la température à la sortie de l'évaporateur qui est réalisée par un capteur de température situé à la sortie de l'évaporateur soit dans le premier conduit, soit dans le second conduit.

Dans ce système, lorsque le capteur de température est disposé dans le premier conduit, la température de consigne à partir de laquelle l'évaporateur et/ou l'organe de chauffe sont commandés en fonctionnement ou en arrêt est adaptée spécifiquement à cette configuration en raison de la différence de température entre les deux flux d'air selon que l'on se situe en saison froide ou en saison chaude.

A l'inverse, lorsque le capteur de température est situé dans le second conduit, la température de consigne et le système de commande de l'évaporateur et de l'organe de chauffe sont alors être différemment adaptés.

Il en résulte un système complexe devant s'adapter à la position du capteur de température dans l'un ou dans l'autre conduit d'air.

Dans ce contexte, la présente invention vise une unité de conditionnement d'air palliant les inconvénients précités.

A cet effet, l'invention vise une unité de conditionnement d'air dans laquelle au moins un premier flux d'air et un second flux d'air à traiter circulent à travers un évaporateur en étant délimités par une paroi de séparation longitudinale dont une partie s'étend en amont de l'évaporateur jusqu'à une extrémité située à proximité de l'évaporateur, et qui est essentiellement caractérisée en ce qu'un capteur de température est disposé :
- en regard longitudinal de l'extrémité de la partie de la paroi de séparation longitudinale située en amont de l'évaporateur, et
- entre les premier et second flux d'air traversant l'évaporateur.

L'unité de conditionnement d'air de l'invention peut également comporter les caractéristiques optionnelles suivantes considérées isolément ou selon toutes les combinaisons techniques possibles :
- l'extrémité de la partie de la paroi de séparation située en amont de l'évaporateur comporte une plaque transversale, et le capteur de température est disposé :
- en regard longitudinal de la dite plaque transversale, et
- dans une zone de mesure créée par le contournement de la plaque transversale par les premier et second flux d'air à traiter, et située entre les premier et second flux d'air traversant l'évaporateur.
- la hauteur (h) de la plaque transversale (8) est comprise entre 2 et 5% de la hauteur (H) de l'évaporateur (2) et la largeur (l) de la plaque transversale (8) est comprise entre 1,5 et 7% de la largeur (L) de l'évaporateur (2).
- le capteur de température est solidarisé à l'évaporateur.
- dans ce cas, le capteur de température peut être clippé dans les ailettes de l'évaporateur.
- en variante, le capteur de température peut être situé à la sortie de l'évaporateur.

Enfin, l'invention porte sur un véhicule automobile équipé d'une unité de conditionnement d'air telle que précédemment énoncée.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique partielle en coupe longitudinale de l'unité de conditionnement d'air de l'invention selon une première variante,
- la figure 2 est une représentation schématique partielle en coupe longitudinale de l'unité de conditionnement d'air de l'invention selon une deuxième variante,
- la figure 3 est une représentation schématique de l'agencement relatif de l'évaporateur et de la plaque transversale de l'unité de conditionnement d'air de l'invention selon la flèche IV des figures 1 et 2, et
- la figure 4 est une représentation schématique partielle en coupe longitudinale de l'unité de conditionnement d'air de l'invention selon une troisième variante.

L'unité de conditionnement d'air de l'invention 1 comporte un évaporateur 2 et un organe de chauffe 3. Dans le cas d'une installation de type « air/fluide caloporteur », l'organe de chauffe 3 est un radiateur d'échange thermique.

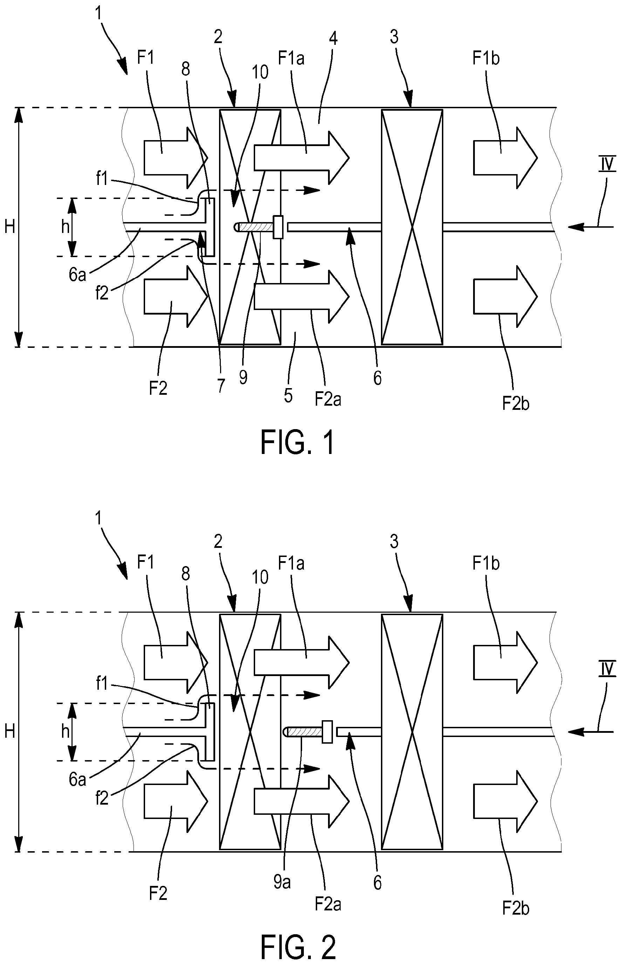

En référence aux figures 1 et 2, des premier F1 et second F2 flux d'air à traiter sont introduits à l'entrée de l'évaporateur 2. Le premier flux d'air F1 provient de l'air extérieur du véhicule et le second flux d'air F2 est issu de l'air intérieur de l'habitacle du véhicule. Ces deux flux d'air F1, F2 sont introduits dans l'unité de conditionnement d'air 1 par un système de ventilation et d'aspiration d'air non représentés.

En sortie de l'unité de chauffe 3, les premier F1b et second F2b flux d'air traités sont distribués dans l'habitacle pour assurer respectivement la ventilation générale et le dégivrage interne du pare-brise, et le chauffage au niveau de la zone des pieds des occupants. Ces moyens de distribution ne sont pas représentés et mais bien connus de l'homme du métier.

Les premier F1 et second F2 flux d'air peuvent par ailleurs contourner l'unité de chauffe 3 lorsque leur chauffage n'est pas requis par des moyens également connus de l'homme du métier.

Les premier et second flux d'air F1,F2 ; F1 b,F2b circulent dans des premier 4 et second 5 conduits d'air délimités par une paroi de séparation 6 qui s'étend longitudinalement dans l'unité de conditionnement d'air 1.

Selon l'invention, l'extrémité 7 de la partie 6a de la paroi de séparation 6 située en amont de l'évaporateur 2 comporte, à proximité de l'évaporateur 2, une plaque transversale rectangulaire 8.

Selon cette configuration, les flux d'air à traiter f1,f2 situés à proximité de la paroi de séparation 6a en amont de l'évaporateur 2 contournent la plaque transversale 8 en contraignant les flux d'air principaux F1a,F2a au niveau de l'évaporateur 2 et en aval de l'évaporateur 2, ce qui provoque un rétrécissement de ces flux d'air principaux F1 a,F2a.

Les deux flux d'air principaux rétrécis F1a,F2a forment ainsi en aval de la plaque transversale 8 une zone indépendante 10.

Selon l'invention, un capteur de température 9 est disposé en regard longitudinal de la plaque transversale 8 dans cette zone indépendante 10 formant zone de mesure 10 entre les premier F1 a et second F2a flux principaux rétrécis.

Sur la figure 1, le capteur de température 9 est clippé sur les ailettes de l'évaporateur 2 non visibles sur cette figure. Sur la figure 2, en variante, le capteur de température 9a est disposé à la sortie de l'évaporateur 2.

Pour ne pas engendrer des problèmes d'écoulement des premier F1 et second F2 flux d'air à traiter, la plaque transversale 8 présente une dimension contrôlée.

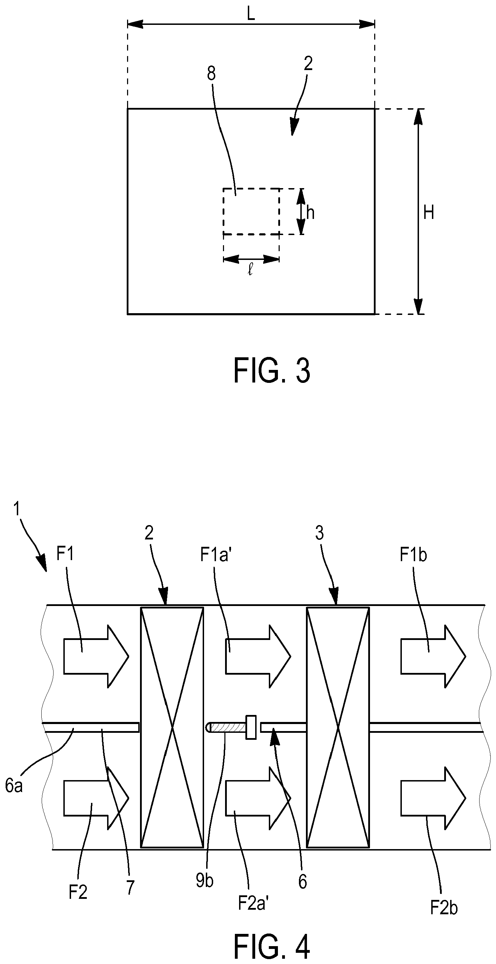

A cet effet et en référence aux figures 1, 2 et 3, la hauteur h de la plaque transversale 8 est comprise entre 2 et 5% de la hauteur H de l'évaporateur 2. Par ailleurs et comme illustré sur la figure 3, la largeur l de la plaque transversale 8 est comprise entre 1,5 et 7% de la largeur L de l'évaporateur 2.

Dans cet exemple, la hauteur H de l'évaporateur 2 est comprise entre 200 et 245 millimètres (figures 1, 2 et 3) et la largeur L de l'évaporateur 2 (figure 3) est comprise entre 149 et 302 millimètres.

En restant dans le cadre de l'invention et en référence à la figure 4, l'unité de conditionnement d'air de l'invention 1 ne comporte pas de plaque transversale 8 au niveau de l'extrémité 7 de la paroi de séparation 6a en amont de l'évaporateur 2.

Le capteur de température 9b est ainsi disposé en regard longitudinal de l'extrémité 7 de la paroi de séparation 6a en amont de l'évaporateur 2, et entre les premier F1 a' et second F2a' flux principaux en sortie de l'évaporateur 2.

Sur la figure 4, le capteur de température 9b est situé à la sortie de l'évaporateur 2, mais il peut être prévu en variante non représentée que le capteur de température soit disposé au niveau de l'évaporateur 2 en étant par exemple clippé sur les ailettes de l'évaporateur 2.

Selon les trois variantes, cette disposition du capteur de température 9 entre les deux flux F1a,F2a ;F1a',F2a' traversant l'évaporateur 2 ou en aval de l'évaporateur 2 permet d'éviter la prise de température dans l'un ou l'autre des deux conduits d'air 4,5.

## Revendications

1. Unité de conditionnement d'air dans laquelle au moins un premier flux d'air et un second flux d'air à traiter circulent à travers un évaporateur en étant délimités par une paroi de séparation longitudinale dont une partie s'étend en amont de l'évaporateur jusqu'à une extrémité située à proximité de l'évaporateur, **caractérisée en ce qu'**un capteur de température (9,9a,9b) est disposé :
- en regard longitudinal de l'extrémité (7) de la partie (6a) de la paroi de séparation longitudinale (6) située en amont de l'évaporateur (2), et
- entre les premier (F1 a) et second (F2a) flux d'air traversant l'évaporateur (2).

2. Unité de conditionnement d'air selon la revendication 1, **caractérisée en ce que** l'extrémité (7) de la partie (6a) de la paroi de séparation (6) située en amont de l'évaporateur (2) comporte une plaque transversale (8), et **en ce que** le capteur de température (9,9a,9b) est disposé :
- en regard longitudinal de la dite plaque transversale (8), et
- dans une zone de mesure (10) créée par le contournement de la plaque transversale (8) par les premier (F1,f1) et second (F2,f2) flux d'air à traiter, et située entre les premier (F1a) et second (F2a) flux d'air traversant l'évaporateur (2).

3. Unité de conditionnement d'air selon la revendication 2, **caractérisée en ce que** la hauteur (h) de la plaque transversale (8) est comprise entre 2 et 5% de la hauteur (H) de l'évaporateur (2), et **en ce que** la largeur (l) de la plaque transversale (8) est comprise entre 1,5 et 7% de la largeur (L) de l'évaporateur (2).

4. Unité selon l'une quelconque des revendications 1 à 3, **caractérisée en ce que** le capteur de température (9) est solidarisé à l'évaporateur (2).

5. Unité selon la revendication 4, **caractérisée en ce que** le capteur de température (9) est clippé dans les ailettes de l'évaporateur (2).

6. Unité selon l'une quelconque des revendications 1 à 3, **caractérisée en ce que** le capteur de température (9a, 9b) est situé à la sortie de l'évaporateur (2).

7. Véhicule automobile, **caractérisé en ce qu'**il comporte une unité de conditionnement d'air (1) selon l'une quelconque des revendications 1 à 6.

## Patentansprüche

1. Klimatisierungseinheit, bei der mindestens ein erster Luftstrom und ein zweiter zu behandelnder Luftstrom durch einen Verdampfer strömen, indem sie durch eine Längstrennwand begrenzt werden, von der ein Teil sich stromaufwärts vor dem Verdampfer bis zu einem in der Nähe des Verdampfers befindlichen Ende erstreckt, **dadurch gekennzeichnet, dass** ein Temperaturfühler (9, 9a, 9b) angeordnet ist:
- längs gegenüber dem Ende (7) des Teils (6a) der Längstrennwand (6), der sich stromaufwärts vor dem Verdampfer (2) befindet, und
- zwischen den ersten (F1a) und zweiten (F2a) Luftströmen, die den Verdampfer (2) durchqueren.

2. Klimatisierungseinheit nach Anspruch 1, **dadurch gekennzeichnet, dass** das Ende (7) des Teils (6a) der Trennwand (6), der sich stromaufwärts vor dem Verdampfer (2) befindet, eine Querplatte (8) aufweist, und dass der Temperaturfühler (9, 9a, 9b) angeordnet ist:
- längs gegenüber der Querplatte (8), und
- in einer Messzone (10), die durch die Umgehung der Querplatte (8) durch den ersten (F1, f1) und zweiten (F2, f2) zu behandelnden Luftstrom erzeugt wird und sich zwischen dem ersten (F1a) und zweiten (F2a) Luftstrom befindet, die den Verdampfer (2) durchqueren.

3. Klimatisierungseinheit nach Anspruch 2, **dadurch gekennzeichnet, dass** die Höhe (h) der Querplatte (8) zwischen 2 und 5% der Höhe (H) des Verdampfers (2) liegt, und dass die Breite (1) der Querplatte (8) zwischen 1,5 und 7% der Breite (L) des Verdampfers (2) liegt.

4. Einheit nach einem der Ansprüche 1 bis 3, **dadurch gekennzeichnet, dass** der Temperaturfühler (9) fest mit dem Verdampfer (2) verbunden ist.

5. Einheit nach Anspruch 4, **dadurch gekennzeichnet, dass** der Temperaturfühler (9) in die Rippen des Verdampfer (2) eingeklinkt ist.

6. Einheit nach einem der Ansprüche 1 bis 3, **dadurch gekennzeichnet, dass** der Temperaturfühler (9a, 9b) sich am Ausgang des Verdampfers (2) befindet.

7. Kraftfahrzeug, **dadurch gekennzeichnet, dass** es eine Klimatisierungseinheit (1) nach einem der Ansprüche 1 bis 6 aufweist.

## Claims

1. Air-conditioning unit in which at least a first air flow and a second air flow which are intended to be processed flow through an evaporator and are delimited by a longitudinal partition wall, a portion of which extends upstream of the evaporator as far as an end located near the evaporator, **characterized in that** a temperature sensor (9, 9a, 9b) is arranged:
- longitudinally opposite the end (7) of the portion (6a) of the longitudinal partition wall (6) located upstream of the evaporator (2), and
- between the first air flow (F1a) and second air flow (F2a) passing through the evaporator (2).

2. Air-conditioning unit according to Claim 1, **characterized in that** the end (7) of the portion (6a) of the partition wall (6) located upstream of the evaporator (2) comprises a transverse plate (8), and **in that** the temperature sensor (9, 9a, 9b) is arranged:
- longitudinally opposite the transverse plate (8) and
- in a measurement zone (10) which is produced by the bypassing of the transverse plate (8) by the first air flow (F1, f1) and second air flow (F2, f2) which are intended to be processed, and which is located between the first air flow (F1a) and second air flow (F2a) which pass through the evaporator (2).

3. Air-conditioning unit according to Claim 2, **characterized in that** the height (h) of the transverse plate (8) is between 2 and 5% of the height (H) of the evaporator (2), and **in that** the width (1) of the transverse plate (8) is between 1.5 and 7% of the width (L) of the evaporator (2).

4. Unit according to one of Claims 1 to 3, **characterized in that** the temperature sensor (9) is fixedly joined to the evaporator (2).

5. Unit according to Claim 4, **characterized in that** the temperature sensor (9) is clip-fitted in the fins of the evaporator (2).

6. Unit according to one of Claims 1 to 3, **characterized in that** the temperature sensor (9a, 9b) is located at the outlet of the evaporator (2).

7. Motor vehicle, **characterized in that** it comprises an air-conditioning unit (1) according to one of Claims 1 to 6.
